# EUROPEAN PATENT APPLICATION

(11) **EP 3 079 250 A1**
(43) Date of publication of application: **12.10.2016**
(21) Application number: 16163989.3
(22) Date of filing: 06.04.2016
(51) Int. Cl.: H02M 3/335, H02M 1/00

(54) **ISOLATED BIDIRECTIONAL DUAL-ACTIVE-BRIDGE DC-DC CONVERTER WITH DUAL-PHASE SHIFT CONTROL**

(30) Priority: 07.04.2015 GB 201505861
(71) Applicant: Nissan Motor Manufacturing (UK) Ltd., Cranfield Bedfordshire MK43 0DB (GB)
(72) Inventor: URQUHART, Iain, Bedfordshire MK43 0DB (GB); GREENOUGH, Jim, Bedfordshire MK43 0DB (GB); LIU, Xu, Sheffield S1 3JD (GB)

(57) **Abstract**

The present invention relates to an electrical charger 10 comprising; a power converter having a Dual Active Bridge (DAB) 12, the DAB 12 having a primary H-bridge 16 and a secondary H-bridge 18, each H-bridge having a plurality of switches 22. The charger 10 also comprising a controller 14 for controlling a switching sequence of the DAB 12, the switching sequence arranged to control an outer phase shift D₂ between the primary and secondary H-bridges 16,18 of the DAB, the switching sequence also arranged to control an inner phase shift D₁ of the primary H-bridge 16 and an inner phase shift D₁ of the secondary H-bridge 18; wherein the inner phase shift D₁ of the secondary H-bridge 18 has a direction opposite to the inner phase shift D₁ of the primary H-bridge 16.

## Description

### TECHNICAL FIELD

The present invention relates to an electric or hybrid electric vehicle charger, specifically those chargers including a power converter having a dual active bridge (DAB) topology.

### BACKGROUND

An electric or a hybrid electric vehicle includes a battery, for example a Lithium-ion battery, for powering the vehicle's drive systems. The battery is a rechargeable battery which can be recharged from an electrical grid. A charger is typically provided and acts as an interface between the grid and the battery. The charger serves two primary functions. The first function is to provide an electrical link between the grid and the battery to convert electricity from the grid into a suitable form for charging the battery. In addition, the charger serves to provide galvanic isolation between the grid and the battery. Galvanic isolation eliminates an electrical connection between the grid and the battery by transferring power to a different form, in this case a magnetic field, as described below. In this way, any faults from the grid side are not transmitted to the vehicle so the risk of electric shocks at the vehicle is minimised.

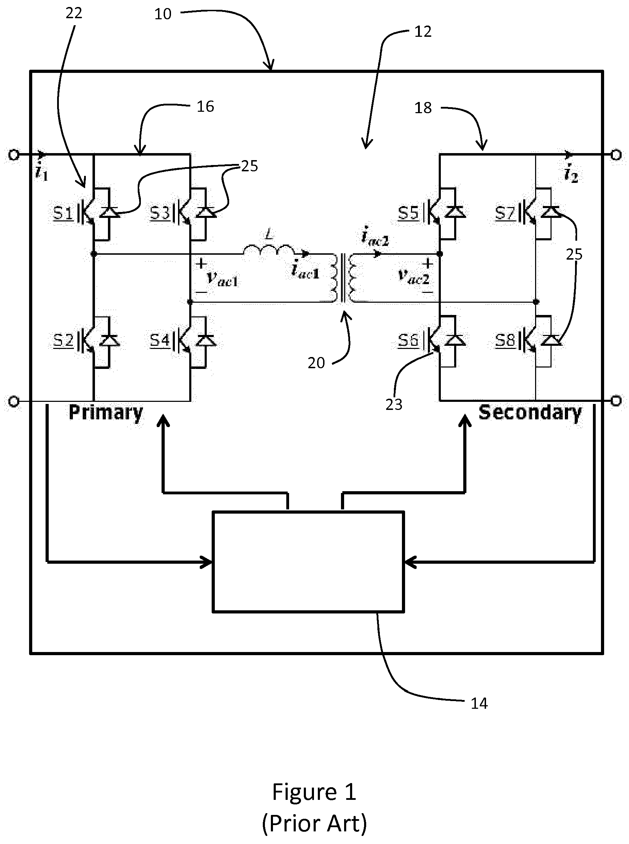

With reference to Figure 1, a known charger 10 includes a power converter 12 having a dual active bridge topology and a controller 14. The dual active bridge 12 includes a primary H-bridge 16, a secondary H-bridge 18 and a transformer 20 between the two. Each H-bridge includes four switches 22, where S1 to S4 are on the primary H-bridge 16 and S5 to S8 are on the secondary H-bridge 18. Figure 1 also shows an inductance, represented by 'L', which inductance represents leakage inductance of the transformer and is not intended to denote a physical component.

The switches 22 each include a transistor 23 in parallel with a diode 25. The diodes 25 ensure unidirectional flow of charge through the switch 22. Reverse current flow is possible only when the transistor 23 is closed.

There are numerous options available for controlling current flow through each switch 22 by closing and opening selectively specific transistors 23. The switches 22 operate according to the states (open or closed) of each transistor 23, coupled with the orientation of each diode 25. For example, if transistor 23 of switch S1 is closed, current will flow from the positive source voltage terminal and return to the source through the diode of switch S3. The diodes 25 prevent current flow through switches S2 and S4. However, if for example, the transistor 23 of S4 is closed, current flows through S4 instead of S3. If transistor 23 of S1 is then opened, current passes only through the diode 25 of switch S2, not S1, nor S3.

The switches 22 on the primary H-bridge 16 combine to form a DC-AC converter, or inverter, to convert a rectified DC voltage from the grid to an AC voltage at the transformer 20.The transformer 20 transfers the AC voltage from the primary H-bridge 16 to the secondary H-bridge by electromagnetic induction. The transformer 20 thus induces an AC voltage to the secondary H-bridge 18. The switches S5 to S8 of the secondary H-bridge 18 combine to form an AC-DC, or rectifier, convertor to convert the AC voltage received from the transformer 20 to a DC voltage to charge the battery. For contextual purposes, the grid voltage is supplied at 240V_{AC} and the battery voltage is 360 V_{DC}. It will be appreciated that the battery voltage is a nominal value and may vary depending on, for instance, the state of charge of the battery to between 260 V_{DC} (flat battery) and 400 V_{DC} (fully charged). These values may of course vary depending on the type of battery. Since the primary and secondary H-bridges 16, 18 are electromagnetically coupled by virtue of the transformer 20, no direct physical connection exists. The absence of the direct physical connection between the two H-bridges 16, 18 provides galvanic isolation of the battery from the grid.

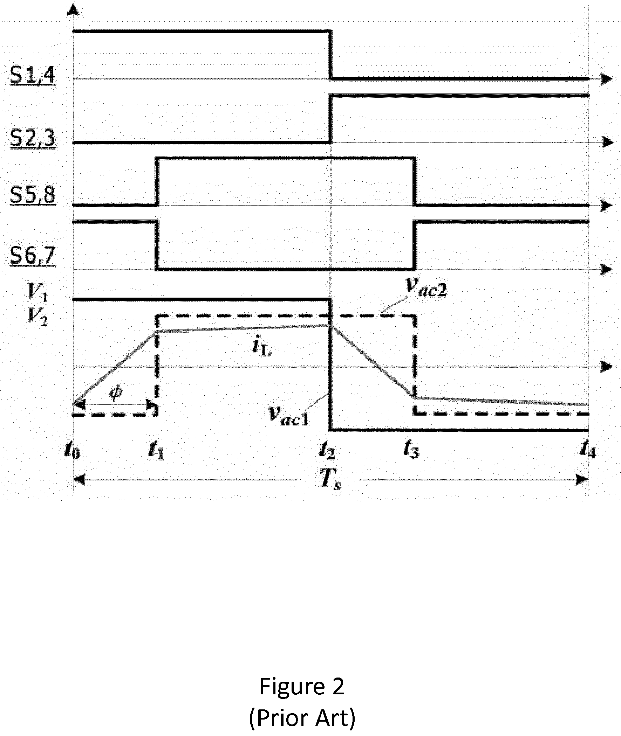

With reference to Figure 2, a known switching sequence is shown in the form of a single phase shift switching sequence. For single phase shift, the switches 22 of both the primary H-bridge 16 and the secondary H-bridge 18 are operated in pairs. Specifically, the transistors of S1 and S4 are switched between closed and open simultaneously to the transistors 23 of switches S2 and S3 being switched from open to close, and vice versa. It is noted that for single phase shift switching sequence, current is only allowed to flow through each switch 22 when its transistor 23 is closed.

As can be seen on the lowest part of the graph of Figure 2, this switching sequence causes the voltage across the primary side of the transformer, *v*_{ac1}, to drop from a positive voltage to a negative voltage at the point of switching, as shown at time period t2. In this way, the primary side voltage, *v*_{ac1}, is in the form of a square wave. It should be noted that the rectified grid voltage V₁ is DC and is thus in the form of a horizontal line, not shown in Figure 2, which remains at the same magnitude of positive voltage regardless as to the state of the switches 22.

The switches 22 of the secondary H-bridge 18 are also switched in pairs with S5 and S8 being switched from false to true simultaneously and with switches S6 and S7 being switched from closed to open, and vice versa. The point of switching on the secondary H-bridge 18, relative to the primary H-bridge 16, is delayed by a predetermined amount, known as a phase shift Φ. The magnitude of Φ is shown on the lower graph of Figure 2. The voltage across the secondary H-bridge 18, *v*_{ac2}, is shown as a broken line in Figure 2. *v*_{ac2} is also in the form of a square wave which is responsible for converting the voltage back to DC for charging the battery. This resulting DC voltage is shown as V₂ in Figure 2 although not represented as a line. V₂ is a positive constant magnitude voltage which is lower in magnitude than V₁ though the dual active bridge 12 can be calibrated in other ways so as to change the relative magnitudes of V₁ and V₂ accordingly. Specifically, V₁ can be higher, equal to, or lower than, the secondary voltage, V₂ depending on any use requirements. The transformer turn ratio can be adjusted to accommodate large differences in V₁ and V₂.

Single phase shift switching sequences are inherently inefficient in terms of energy transfer from the grid to the battery. This is primarily due to reactive power losses. Reactive power is the power 'consumed' by a reactive device such as a capacitor or an inductor, for instance a transformer coil, to generate the magnetic or static field in the device. During the positive half of an AC cycle, the system charges to store energy in a field. As the cycle reverses, the field collapses pushing power backwards into the supply. Summing power during the charging and discharging phase, the net power will be zero. Accordingly, reactive power is lost in the system. For an inductive device, for instance a transformer coil, current is 'consumed' to form the magnetic field. The consumption of current causes a phase offset between the voltage and the current, with the current lagging behind the voltage. As a result, instantaneous power will be lower than the input power, or otherwise called the apparent power. A ratio between the active power and the apparent power is known as a power factor. The power factor will dictate the magnitude of input power required to achieve an instantaneous power in the system. To support a larger input power, a larger power supply will be required and also cables of larger dimensions to support the current. Doing so is both inefficient and costly. Accordingly, it is desirable to reduce or potentially eliminate reactive power from the system.

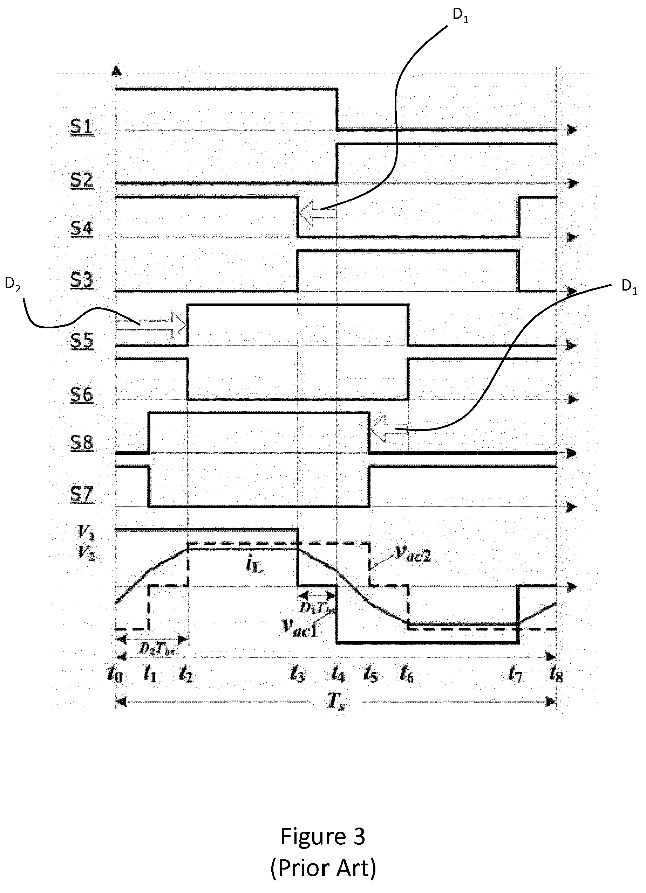

With reference to Figure 3, a different switching sequence is shown, specifically a dual phase shift switching sequence. In this case, the transistors 23 of each switch are controlled between open and closed states which work in tangent with the orientation of each diode 25 to allow or prevent current passing through each switch 22. Accordingly, unlike single phase shift switching, current can flow through a switch 22 when the transistor 23 of said switch 22 is open by virtue of the diode 25. For instance, current is initially allowed to flow through S1 and S4 when their respective transistors 23 are closed. However, when the transistor 23 of S4 opens whilst the transistor 23 of S1 remains closed; current stops flowing through S4 and instead flows through the diode 25 of switch S3. In order to direct the current through S2 and S3, transistors 23 or each switch 22 are closed. In this way, the transition between current flowing through switches S1, S4, and S2, S3 is staggered. The result is an inner phase shift, which can be seen in the waveform of Figure 3 as D₁. The inner phase shift D₁ is a negative phase shift since the switches on the inner part of the H-bridge (S3 and S4) switch prior to those on the outer part of the H-bridge (S1 and S2). The inner phase shift D₁ is used to reduce the amount of reactive power. The secondary H-bridge also exhibits a negative inner phase shift, i.e. of the same direction as that of the primary H-bridge, as can be seen by the phase shift labelled as D1 on switches S7 and S8.

Also shown on Figure 3 is an outer phase shift D₂, specifically a phase shift between primary and secondary H-bridges. The outer phase shift D₂ is used to control the transfer of active power through the dual active bridge. The outer phase shift D₂ is a positive phase shift since switches S5 and S6 lag behind S1 and S2. The bottom graph on Figure 3 shows that operating the switching sequence in this way reduces the reactive power since the current *i_{L}* is negative for a shorter duration whilst *v_{ac1}* is positive, than with the single phase shift switching sequence as shown in Figure 2. Accordingly, reactive power is reduced.

Dual phase shift switching sequences are not without their disadvantages. As will be described in more detail below, these disadvantages include control instability and poor power transfer efficiency.

It is an object of the present invention to alleviate the aforementioned problems and further improve on the prior art.

### SUMMARY OF THE INVENTION

According to an aspect of the present invention there is provided an electrical charger comprising; a power converter having a Dual Active Bridge (DAB), the DAB having a primary H-bridge and a secondary H-bridge, each H-bridge having a plurality of switches; a controller for controlling a switching sequence of the DAB, the switching sequence arranged to control an outer phase shift between the primary and secondary H-bridges of the DAB, the switching sequence also arranged to control an inner phase shift of the primary H-bridge and an inner phase shift of the secondary H-bridge; wherein the inner phase shift of the secondary H-bridge has a direction opposite to the inner phase shift of the primary H-bridge.

Inner phase shift is used to denote the timing difference between inner and outer switches of each H-bridge. Outer phase shift is used to denote the timing difference between corresponding switches of the primary and secondary H-bridges. The bi-directionality of the inner phase shifts provides for more efficient energy transfer since reactive power can be eradicated. Also, controllability of the inner phase shifts is also improved in the event of any oscillations in outer phase shift. In addition, changes in outer phase shift using a bidirectional inner phase shift switching sequence, do not result in an over shoot in current. Lower current has a beneficial effect that the dimensions of the physical components can be reduced. Smaller components have reduced mass and so there is a knock on effect of reducing power consumption from the power source in-use by utilising components of smaller dimensions. In addition, cost reductions are also possible when charging using this power converter since the power requirements will be lower.

The magnitude of the inner and outer phase shifts may be changeable between 0 and 1, and wherein the magnitude of the inner and outer phase shifts may be changeable such that the magnitude of the outer phase shift may be greater than the magnitude of the inner phase shift to allow power flow from an exterior power source to a battery, and the magnitude of the outer phase shift may be less than the magnitude of the inner phase shift to allow power flow from a battery to an exterior electrical load.

Bidirectional power flow through the dual active bridge allows for the battery to be charged and also discharged so as to be used as a power source for other components, such as household or garden appliances. In addition, power stored in the battery can be used as a damping mechanism to damp out electrical oscillations in the grid whilst the battery is being charged. When using the battery power in this way, further components would be required, such as an inverter, downstream of the DAB to convert the DC output on the primary side to AC.

The magnitude of the outer phase shift may be between 0.1 and 0.9. An outer phase shift between 0.1 and 0.9 is an efficient operating range.

The magnitude of the outer phase shift may be between 0.1 and 0.5.

0.1 to 0.5 for the outer phase shift is considered to be the most efficient range in terms of power transfer through the dual action bridge.

The electrical charger may be suitable for use as an electric or hybrid electric vehicle charger.

According to a further aspect of the present invention there is provided an electric or a hybrid electric vehicle comprising the aforementioned electrical charger.

According to a further aspect of the present invention there is provided a method of controlling power transfer through an electrical charger, the method comprising; applying a primary DC voltage to a Dual Active Bridge (DAB);controlling an outer phase shift of the DAB; controlling an inner phase shift of a primary H-bridge of the DAB; and controlling an inner phase shift of a secondary H-bridge of the DAB in a direction opposite to the inner phase shift of the primary H-bridge.

The method may comprise; controlling the magnitude of the inner and outer phase shifts to between 0 and 1; setting the magnitude of the outer phase shift to be greater than the magnitude of the inner phase shift to allow power to flow from an exterior source to a battery; and subsequently setting the magnitude of the outer phase shift to be less than the magnitude of the inner phase shift to allow power to flow from the battery to an exterior electrical load.

The method may comprise; setting the magnitude of the outer phase shifts to between 0.1 and 0.9.

The method may comprise; setting the magnitude of the outer phase shifts to between 0.1 and 0.5.

The electrical charger may be suitable for use as an electric or hybrid electric vehicle charger.

### BRIEF DESCRIPTION OF THE FIGURES

The invention is best described with reference to the accompanying Figures, in which;
Figure 1 shows a charger for an electrical or hybrid electric vehicle as known in the prior art;
Figure 2 shows a wave form of the charger from Figure 1 resulting from a known single phase shifts switching sequence;
Figure 3 shows a similar view to Figure 2 resulting from a known dual phase shift switching sequence;
Figure 4 shows an electric or hybrid electric vehicle incorporating a charger according to the present invention;
Figures 5a-5h show a dual active bridge (DAB) from the charger of Figure 4 during switching according to a bi-directional dual phase shift switching sequence of the present invention;
Figure 6 shows a resulting wave form of the DAB from Figure 5;
Figures 7a and 7b show transmission power as a function of inner and outer phase shifts comparing the switching sequence of the present invention to a switching sequence from the prior art;
Figures 7c and 7d show carpet plots corresponding to Figures 7a and 7b, respectively;
Figures 8a and 8b show the variation of inner phase shift, D₁, at the same oscillation of outer phase shift, D₂ both the switching sequences of the present invention and the prior art;
Figure 9 shows power transfer efficiency of the switching sequence of the present invention compared to that of the switching sequence of the prior art;
Figures 10a and 10b show dynamic performance of current, I, for transient changes in outer phase shifts for both the switching sequence of the present invention and the switching sequence from the prior art.

### DETAILED DESCRIPTION

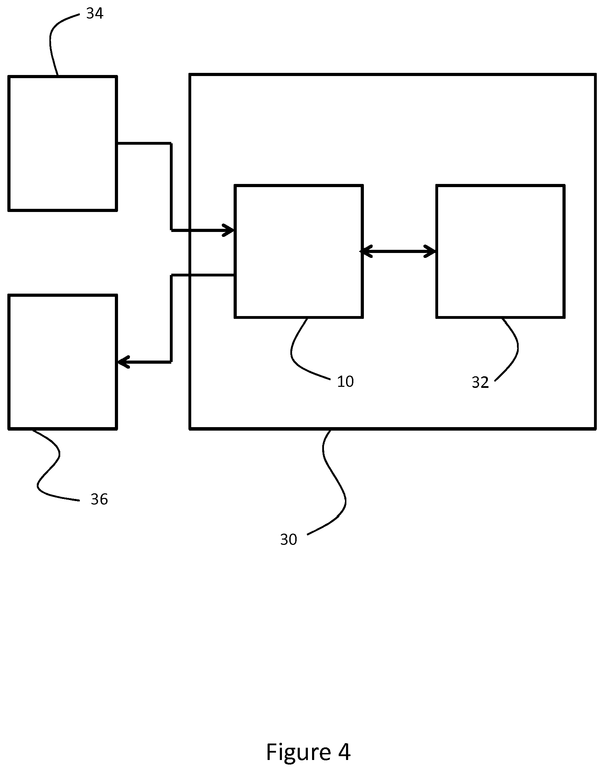

With reference to Figure 4, an electric or hybrid electric vehicle 30 includes a battery 32 connected to a charger 10 which is connectable to a grid 34 for receiving a rectified DC voltage therefrom. The charger 10 is also connectable to an electrical load 36 for sending a DC voltage thereto. The electrical load is an electrical appliance, itself having a rechargeable battery. The electrical appliance is a household or garden appliance. The battery 32 is a Lithium-ion battery or similar. A DC voltage is used to charge the battery 32.

The physical components of the charger 10 are the same as the prior art, as shown in Figure 1. Accordingly, the structural components of the charger 10 are described in no further detail here. In principle, a new mode of operation of the charger 10 is provided which is dictated by a modified switching sequence governed by controller 14.

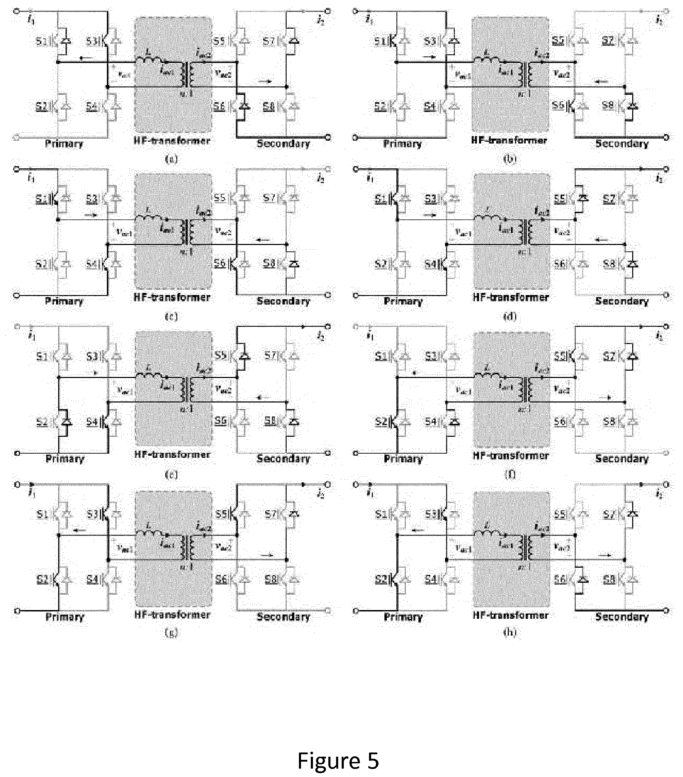

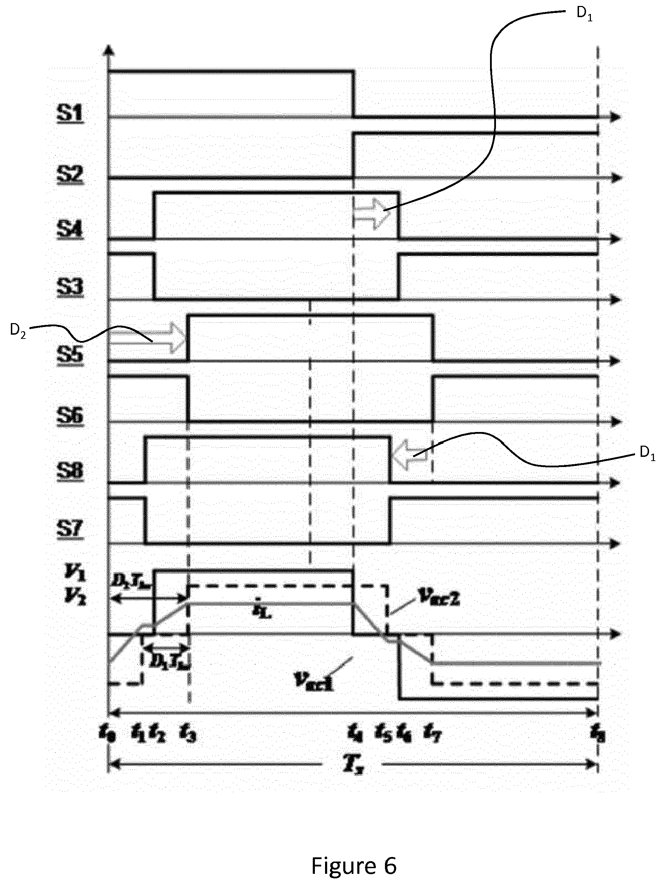

With reference to Figure 5, the switches S1 to S8 of the Dual Active Bridge are switched according to a bi-directional inner phase shift switching sequence. This switching sequence has eight operational modes represented by sub-Figures (a) to (h) in Figure 5. Whilst the operational modes are illustrated in Figures 5a to 5h, the status of the switches S1 to S8 and the voltage and current levels through the primary and secondary H-bridge are shown in Figure 6. These various operational modes can be better understood with reference to the subsequent paragraphs Mode 1 to Mode 8. As described above, the term switch, denoted by S1 to S8, is used to describe the combination of the transistor in parallel with the diode.

Mode 1 (*t₀-t₁*): As shown in Fig.5 (a), at t₀, the transistor of S3 is the only transistor which is in a closed state. Due to the negative current *i_{L}*, the current will flow through S3 and the diode of S1. S1 and S3 of the primary H-bridge are thus on whilst S2 and S4 are off. On the secondary H-bridge, the current will flow through the diodes of S6 and S7 and the voltage across L is *nV₂.* S6 and S7 are thus on whilst S5 and S8 are off. This mode will end up with switching on S8 (mode 2 below).

Mode 2 (*t₁-t₂*): As shown in Fig. 5 (b), on the primary H-bridge, S1 and S3 remain switched on but it is noted that the transistor of S1 is closed simultaneously to the transistor of S3 opening. On the secondary H-bridge, S7 is turned off and S8 is turned on due to the transistor of S6 being closed. During this mode, the voltage across L is zero. This mode will end up with switching on S4 (mode 3 below).

Mode 3 (*t₂-t₃*): As shown in Fig. 5 (c), this mode will start with switching off S3 and switching on S4 simultaneously by closing the transistor of S4. During this mode, the current of L flows through S1, S4, S6 and (the diode of) S8. This mode will end up with switching S6 off (Mode 4 below).

Mode 4 (*t₃-t₄*): As shown in Fig. 5 (d), at t3, S6 is turned off by opening its transistor. Due to the positive current, the current will flow through the diodes of S5 and S8, thus switching on S5. The current in the primary H-bridge will flow through S1 and S4.

Mode 5 (*t₄-t₅*): As shown in Fig. 5 (e) this mode starts from switching off S1, by opening its transistor. Due to the positive current, the current iL will flow through the diode of S2 and S4. This mode will be end up with switching on S7 (mode 6 below).

Mode 6 (*t₅-t₆*): As shown in Fig. 5 (f) at t5, the transistor of S5 is switched on resulting in current flowing through the diode of S7 and ceasing to flow through the diode of S8. Switches S5 and S7 are on and S6 and S8 are off. It is noted that the transistor of S2 is closed simultaneously to the transistor of S4 being opened during mode 6. However, this change in transistor state of S2 and S4 does not cause a change in switching state (on or off) so S1 and S3 are still off whereas S2 and S4 are on.

Mode 7 (*t₆-t₇*): As shown in Fig. 5 (g) in this mode, S4 is turned off and S3 is turned on by closing the transistor of S3. In mode 7, switches S1 and S4 are off and S2 and S3 are on.

Mode 8 (*t₇*-*t₈*): As shown in Fig. 6 (h) at t₇, the transistor of S5 is opened. This results in S5 being turned off simultaneously to S6 being turned on by virtue of current flowing through the diode of S6. The current still flows through the diode of S7. In mode 8 switches S6 and S7 are on whereas S5 and S8 are off.

Figure 6 shows a wave form resulting from the operational sequence described with reference to Figure 5.

With reference to Figure 6, the wave forms have been mapped for each of the aforementioned operational modes. The outer phase shift D₂ is a negative phase shift since the time of switching S5 on the secondary H-bridge 18 is delayed in comparison to switching S1 of the primary H-bridge 16. The inner phase shifts D₁ share the mathematical parameter D₁ since they are of the same magnitude. However, as can be seen from Figure 6 the inner phase shift D₁ of the primary H-Bridge 16 is a negative phase shift since switching of S4 (and S3) lags behind the switching of S1 (and S2). In contrast, the inner phase shift D₁ of the secondary H-Bridge 18 is a positive phase shift since S8 (and S7) switches in advance of S5 (and S6). The inner phase shift D₁ of the secondary H-Bridge 18 has a direction opposite to the inner phase shift D₁ of the primary H-Bridge 16.

The lower part of Figure 6 shows that the resulting wave form eliminates any reactive power since no backflow of current can be seen for a positive or negative primary H-bridge voltage, *v_{ac1}.* More specifically, positive *v_{ac1}* does not coincide with negative current *i_{L}*. Similarly, negative *v_{ac1}* does not coincide with positive current *i_{L}*. Elimination of reactive power results in more efficient power transfer leading to a reduction in the required power source and component sizes within the system. Rationale for these benefits is explained in further detail above.

Further benefits of the bidirectional inner phase shift switching sequence can be understood with reference to the subsequent Figures.

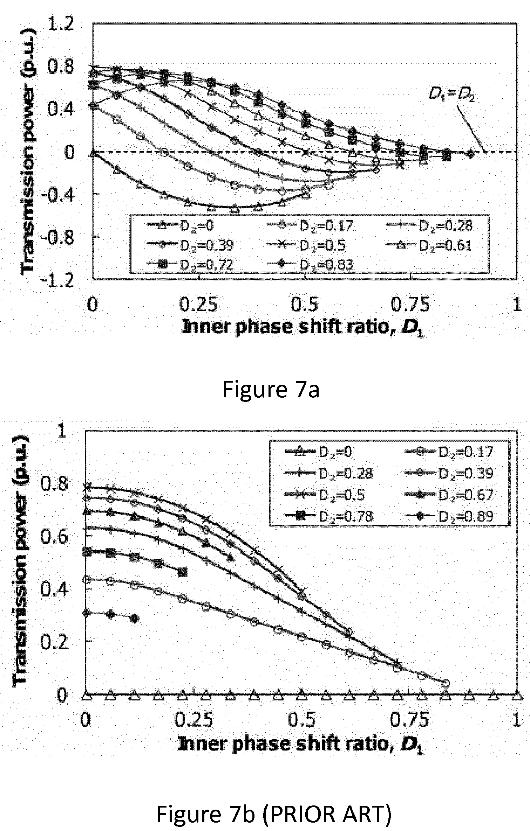

Figures 7a and 7b compare power transmission through the dual active bridge 12 for dual phase shift control having bidirectional inner phase shift and for single directional inner phase shift sequences respectively. It can be seen that both positive and negative power flow can be achieved using the bidirectional inner phase shift switching sequence. Such bidirectional power transmission is not possible with the single directional inner phase shift switching sequence as known from the prior art.

Positive power transmission is from the primary H-bridge 16 to the secondary H-bridge 18. In use, positive power flow is used for charging the battery 32 from a grid 34 (Fig 4). Negative power transmission is from the secondary H-bridge 18 to the primary H-bridge 16. In use, negative power transmission can be used by an electrical load, such as a household or garden appliance.

In order to achieve the bidirectional power transmission through the dual active bridge 12, the magnitude of the inner D₁ and outer D₂ phase shifts are changeable between 0 and 1 by the controller controlling the switching sequence of the dual active bridge 12. To obtain positive transmission power, the magnitude of the outer phase shift D₂ is greater than the magnitude of the inner phase shift D₁. To obtain negative power transmission, the magnitude of the outer phase shift D₂ is less than the magnitude of the inner phase shift D₁.

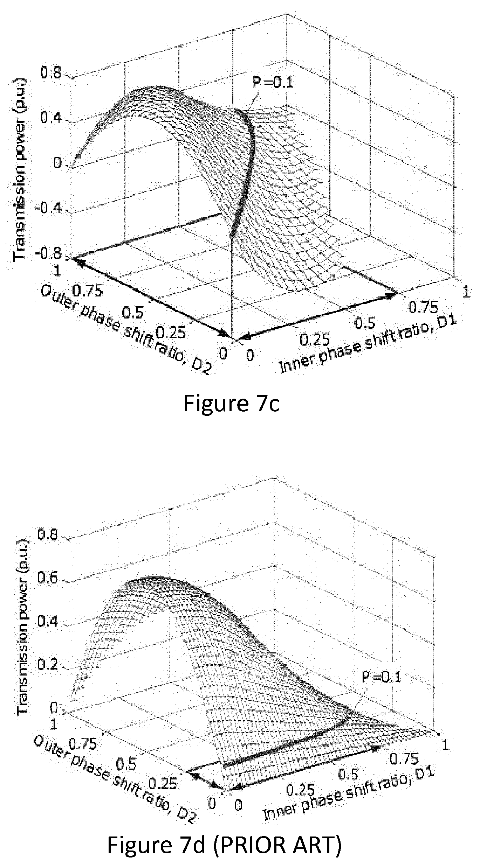

Figures 7c and 7d present the results shown in Figures 7a and 7b in the form of a carpet plot for 3D visualisation purposes.

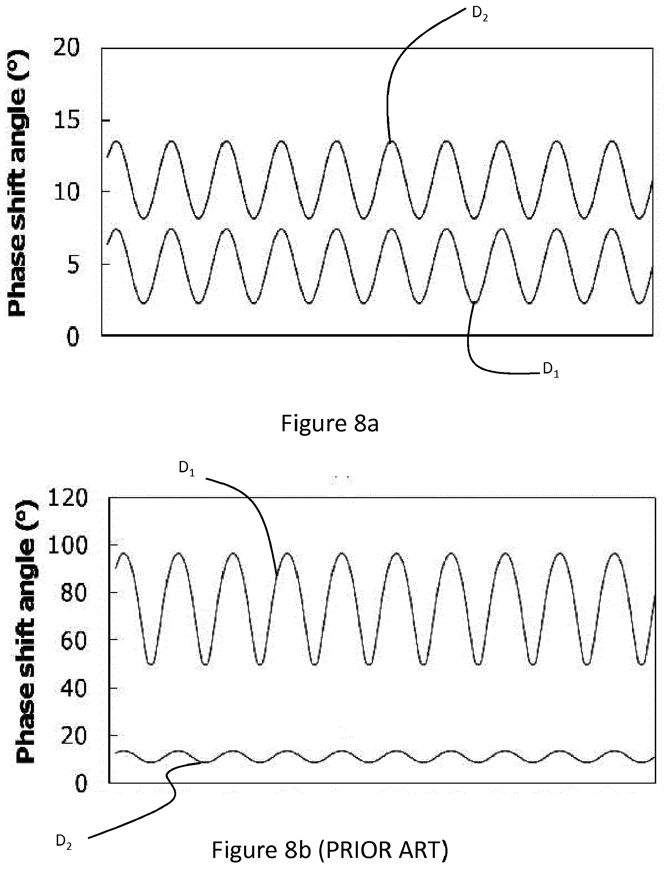

Figures 8a and 8b show the instability of the outer phase shift D₂ for disturbances in inner phase shift D₁. Figure 8a shows the results for the bi-directional inner phase shift switching sequence. Figure 8b shows the results for single directional inner phase shift switching sequence, as known from the prior art.

Small disturbances of outer phase shift ratio D₂ result in much larger amplitude oscillations of inner phase shift ratio D₁ when using the single directional inner phase shift switching sequence, as shown in Figure 8b. Such instability places a high burden on the control logic of the controller. Such instability has been reduced by using the bidirectional inner phase shift switching sequence as shown in Figure 8a. The bidirectional inner phase shift switching sequence, as shown in Figure 8a, results in a more stable response of inner phase shift ratio D₁ for disturbances of outer phase shift ratio D₂. In fact, experimental data suggests that disturbances of the outer phase shift ratio D₂ are of the same magnitude as the originating disturbances of D₁. Accordingly, a bidirectional inner phase shift switching sequence results in improved controllability compared to the prior art.

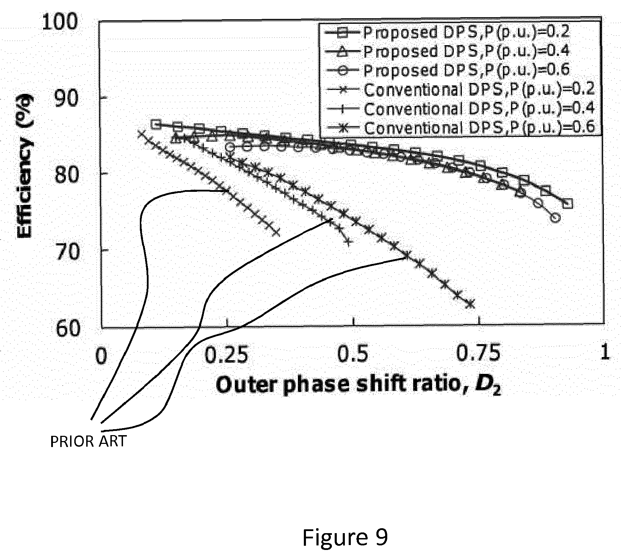

Figure 9 shows efficiency of power transfer through the dual active bridge for both a single phase shift switching sequence, as known from the prior art, and the bidirectional inner phase shift switching sequence. The lower most three trend lines on Figure 9 result from using the single directional inner phase shift switching sequence as known from the prior art. The other trend lines result from the bidirectional inner phase shift switching sequence. It can be seen that using a magnitude of the outer phase shift ratio, D₂, over a range of 0.1 to 0.9, the power transfer efficiency is much improved when using the bidirectional inner phase shift ratio switching sequence. The efficiency is particularly high between 0.1 and 0.5. This improvement in efficiency means that more power from the grid will charge the battery and not be wasted as other forms of energy such as heat.

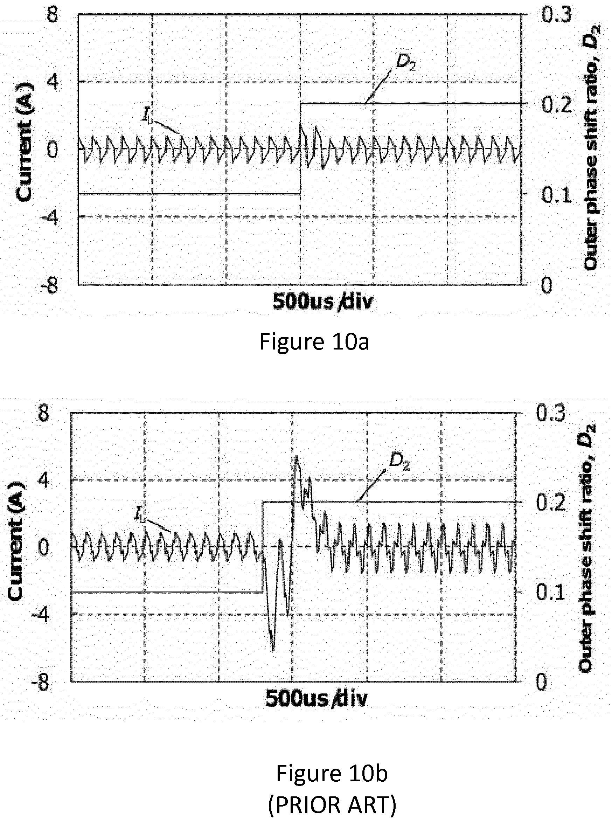

Figures 10a and 10b can be used to compare the impact on the current, *i_{L}*, through the dual active bridge for transient spikes of outer phase shift, D₂, using both the bidirectional inner phase shift switching sequence and the single directional inner phase shift switching sequence, respectively.

The single directional inner phase shift switching sequence can be seen to cause an overshoot in current, *i_{L}*, for a transient step changed in outer phase shift ratio, D₂, as shown in Figure 10b. Such an overshoot is not present using the bidirectional inner phase shift switching sequence as shown in Figure 10a. Electrical components must be sized according to the maximum current which they will experience during use. Accordingly, in order to prevent failure of the components, much larger components must be used when implementing the single directional inner phase shift switching sequence as shown in Figure 10b, compared to implementing the bidirectional inner phase shift switching sequence. Due to the lack of overshoot using the bidirectional inner phase shift switching sequence, much smaller electrical components can be used due to the lower electrical current that the dual active bridge 12 would experience in use. Reducing the size and thus the weight of the components has a knock on effect since a reduction in weight results in a reduction in power consumption to power the vehicle during travel. Accordingly, the reduced weight in components will result in longer battery life.

In additional to the embodiment described above, various alternative embodiments also exist without departing from the scope of the invention as defined by the subsequent claims. For instance, the charger may be used as a charger for other electrical items having a rechargeable battery.

## Claims

1. An electrical charger (10) comprising;
a power converter (12) having a Dual Active Bridge (DAB), the DAB having a primary H-bridge and a secondary H-bridge, each bridge having a plurality of switches (S1-S8);
**characterised in that** there is provided a controller (14) for controlling a switching sequence of the DAB, the switching sequence arranged to control an outer phase shift (D₂) between the primary and secondary H-bridges, the switching sequence also arranged to control an inner phase shift (D₁) of the primary H-bridge and an inner phase shift of the secondary H-bridge;
wherein the inner phase shift of the secondary H-bridge has a direction opposite to the inner phase shift of the primary H-bridge.

2. The charger of Claim 1 wherein the magnitude of the inner and outer phase shifts (D₁, D₂) are changeable between 0 and 1, and wherein the magnitude of the inner and outer phase shifts is changeable such that the magnitude of the outer phase shift is greater than the magnitude of the inner phase shift to allow power flow from an exterior power source to a battery (32), and the magnitude of the outer phase shift is less than the magnitude of the inner phase shift to allow power flow from a battery to an exterior electrical load.

3. The charger of Claim 1 or Claim 2 wherein the magnitude of the outer phase shift (D₂) is between 0.1 and 0.9.

4. The charger of Claim 3 wherein the magnitude of the outer phase shift (D₂) is between 0.1 and 0.5.

5. The charger of any preceding claim being suitable for use as an electric or hybrid electric vehicle charger.

6. An electric or a hybrid electric vehicle comprising the charger of Claim 5.

7. A method of controlling power transfer through an electrical charger (10), the method comprising;
applying a primary DC voltage to a Dual Active Bridge (DAB);
controlling an outer phase shift (D₂) of the DAB;
controlling an inner phase shift (D₁) of a primary H-bridge of the DAB; **characterised in that** the method further comprises :
controlling an inner phase shift (D₁) of a secondary H-bridge of the DAB in a direction opposite to the inner phase shift of the primary H-bridge.

8. The method of Claim 7 comprising;
controlling the magnitude of the inner and outer phase shifts (D₁, (D₂) to between 0 and 1;
setting the magnitude of the outer phase shift (D₂) to be greater than the magnitude of the inner phase shift (D₁) to allow power to flow from an exterior source to a battery (32); and subsequently
setting the magnitude of the outer phase shift (D2) to be less than the magnitude of the inner phase shift (D₁) to allow power to flow from the battery to an exterior electrical load.

9. The method of Claim 7 or Claim 8, comprising;
setting the magnitude of the outer phase shifts (D2) to between 0.1 and 0.9.

10. The method of Claim 9 comprising;
setting the magnitude of the outer phase shifts (D2) to between 0.1 and 0.5.

11. The method of any of Claims 7 to 10 wherein the electrical charger is an electric or hybrid electric vehicle charger.
